# EUROPÄISCHE PATENTSCHRIFT

(11) **EP 1 527 914 B1**
(45) Veröffentlichungstag und Bekanntmachung des Hinweises auf die Patenterteilung: **12.08.2009**
(21) Anmeldenummer: 04025418.7
(22) Anmeldetag: 26.10.2004
(51) Int. Cl.: B60H 1/00, B60H 1/32

(54) **Temperiersystem für ein Fahrzeug und Verfahren zum Trocknen eines in einem derartigen Temperiersystem vorgesehenen Verdampfers einer Klimaanlage**
System for controlling the temperature within a vehicle and a method for drying an air conditioning evaporator provided in such a system
Système pour tempérer l'intérieur d'un véhicule et procédé pour sécher un évaporateur d'air conditionné prévu dans un tel système

(30) Priorität: 03.11.2003 DE 10351241
(43) Veröffentlichungstag der Anmeldung: 04.05.2005
(73) Patentinhaber: J. Eberspächer GmbH & Co. KG, 73730 Esslingen (DE)
(72) Erfinder: Eberspach, Günter, 72649 Wolfschlugen (DE)
(74) Vertreter: Ruttensperger, Bernhard

(56) Entgegenhaltungen:
- EP-A- 1 306 246
- EP-A- 1 342 966
- DE-A1- 10 060 301
- DE-C1- 4 028 787
- US-A1- 2003 094 261
- PATENT ABSTRACTS OF JAPAN Bd. 1999, Nr. 05, 31. Mai 1999 (1999-05-31) & JP 11 042934 A (DENSO CORP), 16. Februar 1999 (1999-02-16)

## Beschreibung

Die vorliegende Erfindung betrifft ein Temperiersystem für ein Fahrzeug gemäß dem Oberbegriff des Anspruchs 1 und ein Verfahren zum Trocknen eines in einem derartigen Temperiersystem vorgesehenen Verdampfers einer Klimaanlage.

Bei modernen Kraftfahrzeugen kann die in den Fahrzeuginnenraum einzuleitende Luft in verschiedener Weise temperiert werden. Zum einen ist es möglich, durch Aktivieren einer Klimaanlage die in den Fahrzeuginnenraum einzuleitende Luft zu kühlen bzw. dieser Luft Feuchtigkeit zu entziehen. Hierzu weisen derartige Klimaanlagen im Allgemeinen einen von einem Kältemittel durchströmten Verdampfer auf, wobei durch Kältemittelverdampfung eine Kühlwirkung erzeugt wird und der den Verdampfer umströmenden Luft dabei auch Feuchtigkeit entzogen wird. Weiterhin ist es bekannt, dass durch Wärmeübertrag auf diese Luft, beispielsweise von einem Kühlkreislauf einer Brennkraftmaschine oder einem sonstigen Heizaggregat, die in den Fahrzeuginnenraum einzuleitende Luft erwärmt werden kann. Durch gleichzeitiges Betreiben der Klimaanlage und Wärmeübertrag auf die einzuleitende Luft kann warme, gleichwohl jedoch getrocknete Luft in den Fahrzeuginnenraum eingeleitet werden.

Bei derartigen Systemen besteht zunehmend das Problem, dass in demjenigen Bereich, in dem der Verdampfer zur Wärmeaufnahme von der ihn umströmenden Luft wirksam ist, sehr feine kleine Zwischenräume bereitstellende Lamellenstrukturen gebildet sind. Das bei der Kühlung aus der Luft ausfallende Wasser wird durch Kapillarkräfte in dieser feinen Lamellenstruktur festgehalten, mit der Folge, dass auf Grund lang anhaltender Feuchtigkeit in diesem Bereich ein unerwünschtes Keimwachstum auftreten kann. Dies kann zur Bildung von Geruchsstoffen führen, die durch Fliteranlagen nicht aus der in den Innenraum einzuleitenden Luft herausgeleitet werden können.

Ferner hat das Ansammeln von Feuchtigkeit im Bereich des Verdampfers zur Folge, dass bei beispielsweise auch hoher Luftfeuchtigkeit bzw. vergleichsweise niedrigen Temperaturen die Gefahr des Beschlagens der Fensterscheiben des Fahrzeugs an der Innenseite erhöht wird.

Ein Temperiersystem gemäß dem Oberbegriff des Anspruchs 1 ist aus der JP 11 042934 A bekannt. In einem Luftführungsschacht einer Klimaanlage sind in der Strömungsrichtung der thermisch zu behandelnden Luft aufeinander folgend angeordnet ein Verdampfer der Klimaanlage sowie ein durch das Kühlmittel der Brennkraftmaschine zur erwärmender Wärmetauscher. Stromaufwärts des Verdampfers ist ein weiterer Wärmetauscher vorgesehen, der durch elektrische Erregung erwärmbar ist.

Auch die DE 40 28 787 C1 offenbart ein Temperiersystem für ein Fahrzeug, bei welchem in der Strömungsrichtung der thermisch zu behandelnden Luft auf ein Gebläse folgend zunächst ein Verdampfer einer Klimaanlage angeordnet ist und darauf folgend der Wärmetauscher eines Kühlkreislaufs einer Brennkraftmaschine umströmt wird, bevor die thermisch behandelte Luft über Luftauslässe in einen Fahrzeuginnenraum geleitet wird.

Es ist die Aufgabe der vorliegenden Erfindung, ein Temperiersystem für ein Fahrzeug sowie ein Verfahren zum Trocknen eines Verdampfers bei einem derartigen Temperiersystem vorzusehen, mit welchen in effizienter Weise dafür gesorgt werden kann, dass im -Bereich- eines Verdampfers -sich ansammelnde Flüssigkeit abgeführt werden kann.

Gemäß der vorliegenden Erfindung wird die Aufgabe gelöst durch ein Temperiersystem für ein Fahrzeug, umfassend einen in einer Luftführungskanalanordnung positionierten Verdampfer einer Klimaanlage, durch welchen Verdampfer der in einen Fahrzeuginnenraum einzuleitenden Luft Wärme oder/und Feuchtigkeit entziehbar ist, wobei in der Luftführungskanalanordnung eine Wärmetauscheranordnung vorgesehen ist, durch welche dieser umströmende Luft Wärme zuführbar ist, und wobei die Wärmetauscheranordnung wenigstens in einer Verdampfertrocknungsbetriebsphase in Luftströmungsrichtung stromaufwärts des Verdampfers ist.

Elementar ist bei dieser Lösung, dass zumindest in bestimmten Betriebsphasen, nämlich zum Trocknen des Verdampfers, die Luftströmung so geführt wird, dass sie, im Gegensatz zu der herkömmlicherweise vorgesehenen Anordnung, zunächst die Wärmetauscheranordnung umströmt, in der normalerweise die Luft zum Einleiten in den Fahrzeuginnenraum erwärmt wird, und danach erst den Verdampfer umströmt. Auf diese Art und Weise wird Wärme von der Wärmetauscheranordnung durch diese umströmende Luft in Richtung zum Verdampfer transportiert. Am Verdampfer sorgt diese Luft dann für eine Erwärmung desselben bzw. für eine verstärkte Abdampfung der dort angesammelten Feuchtigkeit.

Um diesen vorangehend beschriebenen Zustand erlangen zu könnenist die Luftführungskanalanordnung in einen ersten Luftführungszustand umschaltbar, in welchem Luft zuerst die Wärmetauscheranordnung und danach den Verdampfer umströmt.

Da in einer Phase, in welcher der Verdampfer durch Erwärmung desselben getrocknet werden soll, die den Verdampfer umströmende und von diesem dann abgeführte Luft einen vergleichsweise hohen Feuchtigkeitsanteil aufweisen wird, kann es zum Vermeiden eines Beschlages der Fensterscheiben eines Fahrzeugs an der Innenseite derselben vorteilhaft sein, wenn bei in den ersten Luftführungszustand gestellter Luftführungskanalanordnung die Luftführungskanalanordnung die den Verdampfer umströmende Luft nicht in einen Fahrzeuginnenraum einleitet. Beispielsweise kann die die Feuchtigkeit vom Verdampfer abführende Luft nach außen, d.h. zur Umgebung hin, abgegeben werden. Insbesondere bei vergleichsweise niedrigen Außentemperaturen kann es jedoch sein, dass auch während einer derartigen Trocknungsphase es gewünscht wird, dass der Fahrzeuginenraum durch Zufuhr erwärmter Luft erwärmt wird. Um dabei die Gefahr eines Beschlagens der Fensterscheiben eines Fahrzeugs so weit als möglich zu mindern, wird weiter vorgeschlagen, dass bei in den ersten Luftführungszustand gestellter Luftführungskanalanordnung die Luftführungskanalanordnung die den Verdampfer umströmende Luft im Wesentlichen in einen bodennahen Bereich eines Fahrzeuginnenraums einleitet.

Da in normalen Betriebszuständen, also in Zuständen, in welchen der Verdampfer nicht getrocknet wird und beispielsweise zum Kühlen oder/und Trocknen der Luft eingesetzt wird, im Allgemeinen es vorteilhaft ist, wenn zunächst der Verdampfer und dann die Wärmetauscheranordnung umströmt wird,ist dass die Luftführungskanalanordnung in einen zweiten Luftführungszustand stellbar ist, in welchem die Luft zuerst de Verdampfer und danach die Wärmetauscheranordnung umströmt.

Um bei einem derartigen System die Luft bei vergleichsweise hohen Außentemperaturen effizient kühlen zu können, wird weiter vorgeschlagen, dass die Luftführungskanalanordnung in einen dritten Luftführungszustand stellbar ist, in welchem die Luft ohne Umströmung der Wärmetauscheranordnung den Verdampfer umströmt.

Soll die Luft weder gekühlt bzw. getrocknet noch erwärmt werden, kann weiter vorgesehen sein, dass die Luftführungskanalanordnung in einen vierten Luftführungszustand stellbar ist, in welchem die Luft weder die Wärmetauscheranordnung noch den Verdampfer umströmt.

Gemäß einem weiteren Aspekt der vorliegenden Erfindung wird die eingangs genannte Aufgabe gelöst durch ein Verfahren zum Trocknen eines in einem Temperiersystem gemäß Anspruch 1 vorgesehenen Verdampfers einer Klimaanlage, bei welchem Verfahren dem Verdampfer zur Feuchtigkeitsabfuhr Wärme zugeführt wird, wobei das Verfahren durchgeführt wird, wenn ein das Temperiersystem aufweisendes Fahrzeug nicht in einem Fahrbetriebszustand ist.

Wie vorangehend bereits ausgeführt, ist das durch Wärmezufuhr induzierte Trocknen des Verdampfers insbesondere insofem kritisch, als dadurch die den Verdampfer umströmende Luft einen vergleichsweise hohen Feuchtigkeitsanteil mitführen wird. Wenn jedoch dieses Trocknen des Verdampfers in einer Phase vorgenommen wird, in welcher ein Fahrzeug nicht betrieben wird, kann die Gefahr eines ungewünschten Beschlagens der Scheiben eines Fahrzeugs in einem Fahrzustand vermieden werden.

Dabei ist es besonders vorteilhaft, wenn das Verfahren im Anschluss an das Beenden eines Fahrbetriebszustands durchgeführt wird.

In dieser Phase nach dem Beenden des Fahrbetriebsuzustands ist davon auszugehen, dass insbesondere im Bereich einer Brennkraftmaschine und des Kühlsystems derselben noch ausreichend Wärme vorhanden ist, die dazu genutzt werden kann, den Verdampfer zu erwärmen und dabei Feuchtigkeit von diesem abzuführen. Es muss dann lediglich dafür gesorgt werden, dass Luft von der Wärmetauscheranordnung in Richtung zum Verdampfer transportiert wird und dann beispielsweise nach Feuchtigkeitsaufnahme nach außen ausgestoßen werden kann.

Die vorliegende Erfindung wird nachfolgend mit Bezug auf die beiliegenden Zeichnungen detailliert beschrieben. Es zeigt:
- Fig. 1: eine schematische Darstellung eines nicht erfindungsgemäßen Temperiersystems;
- Fig. 2: eine der Fig. 1 entsprechende Ansicht eines erfindungsgemäßen Temperiersystems;

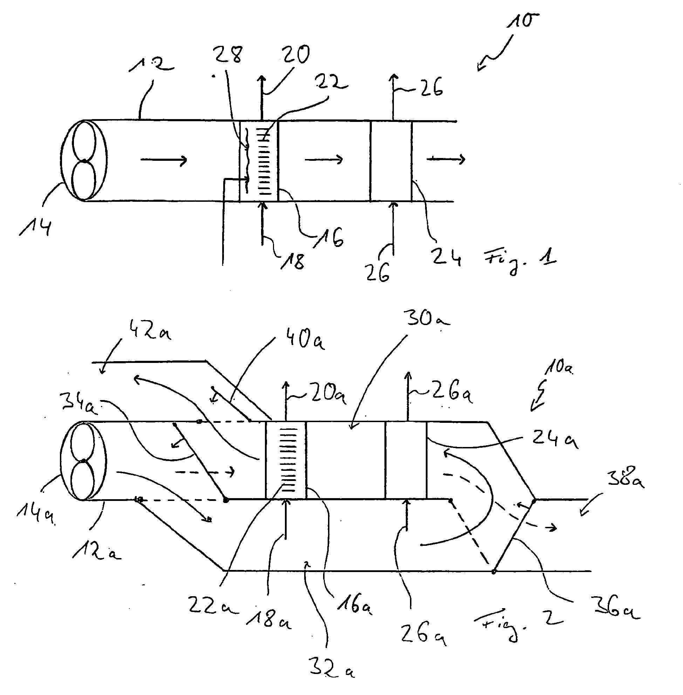

In Fig. 1 ist ein nicht erfindungsgemäßes Temperiersystem allgemein mit 10 bezeichnet. Dieses Temperiersystem 10 umfasst eine Luftführungskanalanordnung 12, in welcher Luft von außen, also der Umgebung, in einen Fahrzeuginnenraum transportiert werden kann. Dazu ist in der Luftführungskanalanordnung 12 ein nur schematisch angedeutetes Luftfördergebläse 14 vorgesehen, durch welches die Luft in Richtung der in der Luftführungskanalanordnung 12 angedeuteten Strömungspfeile gefördert werden kann. In Strömungsrichtung auf das Luftfördergebläse 14 folgend ist ein Verdampfer 16 einer Klimaanlage vorgesehen. Diesem Verdampfer 16 wird im Klimatisierungsbetrieb ein Kältemittel 18 zugeführt. Im Verdampfer 16 verdampft das Kältemittel 18 und nimmt dabei Wärme von der den Verdampfer 16 umströmenden Luft auf. Den Verdampfer 16 verlässt dann ein Kältemitteldampf 20.

Um einen effizienten Temperaturübertrag von der den Verdampfer 16 umströmenden Luft auf das flüssige Kältemittel 18 zu erlangen, sind derartige Verdampfer 16 allgemein mit einer sehr feinen Lamellenstruktur 22 versehen. Diese stellt eine sehr große Wärmeübertragungsoberfläche bereit.

Die den Verdampfer 16 umströmende und bei Betrieb einer diesen aufweisenden Klimaanlage dann gekühlte bzw. auch getrocknete Luft strömt dann weiter in Richtung eines Wärmetauschers 24. Diesem Wärmetauscher 24 wird beispielsweise die in einer Brennkraftmaschine erwärmte Kühlflüssigkeit 26 zugeführt und wird nach Wärmeübertragung auf die den Wärmetauscher 24 umströmende Luft dann wieder in Richtung Brennkraftmaschine oder einem anderen Fahrzeugkühler abgeführt.

Es sei hier darauf hingewiesen, dass die Darstellung des Temperiersystems 10 nur schematisch ist. Insbesondere hinsichtlich der Luftführung können selbstverständlich verschiedene Variationen vorgesehen sein. So könnte die den Verdampfer 16 umströmende Luft auch so geführt werden, dass sie nicht zwangsweise auch den Wärmetauscher 24 umströmt, so dass für einen reinen Kühlbetrieb dann der Wärmetauscher 24 umgangen wird. Hierzu können entsprechende Luftführungsklappen für eine Umlenkung sorgen. Auch kann durch beispielsweise stromabwärts des Wärmetauschers 24 angeordnete Luftführungsklappen dafür gesorgt werden, dass die Luft gezielt in verschiedene Bereiche eines Fahrzeuginnenraums eingeleitet werden kann oder ggf. überhaupt nicht in den Fahrzeuginnenraum eingeleitet wird und beispielsweise zur Umgebung hin abgegeben wird.

An dem Verdampfer 16 ist bei dem in den Fig. 1 dargestellten Temperiersystem 10 weiter eine Heizanordnung 28 vorgesehen. Diese kann beispielsweise dadurch bereitgestellt werden, dass die Lamellenstruktur 22 aus einem Material aufgebaut ist, das bei elektrischer Erregung, also bei Anlegen einer Spannung, erwärmt wird. Auch ist es möglich, verschiedene Oberflächenbereiche des Verdampfers 16, insbesondere der Lamellenstruktur 22, mit derartigem Material zu beschichten. Durch Anlegen einer Spannung an die Heizanordnung 28 wird diese erregt und führt zur Erwärmung des Verdampfers 16 insbesondere in einem oberflächennahen Bereich desselben. Dazu kann die Heizanordnung 28 unter der Ansteuerung einer nicht dargestellten Ansteuervorrichtung stehen, die dafür sorgt, dass in bestimmten, nachfolgend noch beschriebenen Betriebsphasen die Heizanordnung 28 erregt wird, um somit den Verdampfer 16 zu erwärmen.

Als besonders geeignetes Material für eine derartige Heizanordnung hat sich so genanntes PTC-Material erwiesen. Derartiges Material weist einen elektrischen Widerstand auf, der mit zunehmender Materialtemperatur ebenfalls ansteigt. Wird also eine vorbestimmte Spannung, die beispielsweise dem Bordspannungssystem entnommen werden kann, an dieses Material bzw. die Heizanordnung 28 angelegt, so wird sich bei geeigneter Materialauswahl und Materialdimensionierung eine bestimmte Temperatur einstellen, die einen Gleichgewichtszustand repräsentiert. Diese Temperatur kann so gewählt werden, dass sie ausreicht, um bei Erregung der Heizanordnung 28 Feuchtigkeit, die sich im Klimatisierungsbetrieb im Bereich des Verdampfers 16 und vor allem im Bereich der Lamellenstruktur 22 angesammelt hat, abzuführen. Da, wie vorangehend bereits ausgeführt, vor allem diese Lamellenstruktur 22 aus derartigem Material aufgebaut sein kann bzw. mit derartigem Material beschichtet sein kann, wird die Wärme gemäß diesem vorteilhaften Aspekt der Erfindung vor allem dort zur Verfügung gestellt, wo sie sehr effizient eingesetzt werden kann.

Bei dem in Fig. 1 dargestellten Temperiersystem 10 kann also dafür gesorgt werden, dass beispielsweise periodisch durch Erwärmen des Verdampfers 16 die dort sich ansammelnde Feuchtigkeit abgebaut wird und von der den Verdampfer 16 umströmenden Luft mitgeführt wird.

Auf diese Art und Weise kann die Gefahr einer Keimbildung und somit auch der Entstehung von Geruchsstoffen im Bereich des Verdampfers 16 gemindert bzw. ausgeschlossen werden.

Da die in einem derartigen Trocknungsbetrieb den Verdampfer 16 umströmende Luft einen vergleichsweise hohen Feuchtigkeitsanteil mittransportieren wird, kann es vorteilhaft sein, diese Luft nach dem Umströmen des Verdampfers 16 so zu führen, dass sie nicht unmittelbar in den Bereich der Fensterscheiben eines ein derartiges System 10 aufweisenden Fahrzeugs gelangt. Hier kann beispielsweise vorgesehen sein, dass vor oder nach dem Umströmen des Wärmetauschers 24 diese Luft nach außen abgegeben wird und somit überhaupt nicht in den Innenraum gelangt. Weiter ist es möglich, diese Luft oder zumindest einen Teil davon in den bodennahen Bereich des Fahrzeugs einzuleiten, so dass zwar noch eine Erwärmung stattfinden kann, aber nicht eine unmittelbare Kontaktierung der Fensterscheiben an der Innenseite mit dieser mit Feuchtigkeit angereicherten Luft auftreten wird.

Es kann vorgesehen sein, dass dieser Betrieb zum Abtrocknen des Verdampfers 22 dann vorgenommen wird, wenn das Fahrzeug nicht in seinem Fahrbetriebszustand ist. Hier ist es beispielsweise vorteilhaft, in einer Phase, in der das Fahrzeug abgestellt worden ist, also beispielsweise der Fahrbetrieb dadurch beendet worden ist, dass die Brennkraftmaschine abgeschaltet worden ist, den Trockenvorgang durchzuführen. Während dieses Trockenvorgangs kann bei dem in Fig. 1 dargestellten Temperiersystem dann die Heizanordnung 28 erregt werden. Gleichzeitig wird das Luftfördergebläse 24 betrieben, um bei dann erwärmtem Verdampfer 16 durch Umströmung desselben mit Luft Feuchtigkeit abtransportieren zu können. Diese Luft kann dann beispielsweise in die Umgebung wieder abgegeben werden, um den Eintrag der feuchten Luft in den Fahrzeuginnenraum zu vermeiden.

Um für ein derartiges System, wie es in Fig. 1 gezeigt ist, ausreichend Energie bereitstellen zu können, können verschiedene Quellen genutzt werden. So kann selbstverständlich ein im Fahrbetrieb mitlaufender Generator bzw. die von diesem gelieferte elektrische Energie genutzt werden. Auch können am Fahrzeug vorgesehene Batterien, beispielsweise in einem Dachmodul vorgesehene Solarzellen oder sonstige Hilfsenergiequellen, wie eine Brennstoffzelle oder dergleichen, genutzt werden, wobei derartige Hilfsenergiequellen, Batterien oder Solarzellen vor allem dann von Vorteil sind, wenn, wie vorangehend beschrieben, der Trockenbetrieb vorgenommen werden soll, wenn das Fahrzeug an sich außer Betrieb ist und somit ein in den Antriebsstrang integrierter Generator keine Energie liefern kann.

Eine erfindungsgemäßes Temperiersystems ist in Fig. 2 dargestellt. Systembereiche oder Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet.

Bei dem in Fig. 2 dargestellten Temperiersystem 10 umfasst die Luftführungskanalanordnung 12a zwei zueinander parallel liegende Kanalabschnitte 30a, 32a. Im Kanalabschnitt 30a sind der Verdampfer 16a und der Wärmetauscher 24a angeordnet. In einem stromwaufwärts des Verdampfers 16a bzw. zwischen dem Verdampfer 16a und dem Luftfördergebläse 14a liegenden Abschnitt der Luftführungskanalanordnung 12a ist eine umschaltbare Klappenanordnung 34a angeordnet. In dem in Fig. 2 dargestellten Stellzustand schließt diese Klappenanordnung 34a den Kanalabschnitt 30a zwischen dem Luftfördergebläse 14a und dem Verdampfer 16a ab, gibt jedoch den Kanalabschnitt 32a frei. Bei Umstellung der Klappenanordnung 34a in den in der Fig. 2 strichliert dargestellten Zustand ist der Kanalabschnitt 32a abgeschlossen, während der Kanalabschnitt 30a freigegeben ist.

Stromabwärts des Wärmetauschers 24a, d.h. an der bezüglich der Positionierung des Luftfördergebläses 14a entgegengesetzten Seite des Wärmetauschers 24a, ist eine weitere umschaltbare Klappenanordnung 36a vorgesehen. In dem in Fig. 2 dargestellten Zustand schließt diese Klappenanordnung 36a einen weiteren Kanalabschnitt 38a ab, der beispielsweise zum Fahrzeuginnenraum führt, während sie auf diese Art und Weise eine Verbindung zwischen den beiden Kanalabschnitten 32a, 30a herstellt. In dem in Fig. 2 strichliert dargestellten Zustand dieser Klappenanordnung 36a schließt diese die den Kanalabschnitt 32a ab, während eine Verbindung zwischen dem Kanalabschnitt 30a und dem Kanalabschnitt 38a realisiert ist.

Ferner ist im Abschnitt 30a in dem zwischen dem Luftfördergebläse 14a und dem Verdampfer 16a bzw. auch der Klappenanordnung 34a und dem Verdampfer 16a liegenden Bereich eine weitere Klappenanordnung 40a vorgesehen. Diese stellt in dem in Fig. 2 dargestellten Zustand eine Verbindung zwischen dem Abschnitt 30a und einem weiteren Kanalabschnitt 42a her, der beispielsweise wieder nach außen, also zur Umgebung hin führt. Bei Umschaltung der Klappenanordnung 40a in den in Fig. 2 strichliert dargestellten Zustand kann die Verbindung zwischen den Abschnitten 30a und 42a unterbrochen werden.

In der Fig. 2 ist das dort dargestellte Temperiersystem 10a in einem Betriebszustand, in welchem der Verdampfer 16a durch Erwärmung desselben getrocknet werden kann. Die Klappenanordnung 34a ist so geschaltet, dass die Luft unter der Förderwirkung des Luftfördergebläses 14a nicht in Richtung zum Verdampfer 16a strömt, sondern in den Kanalabschnitt 32a einströmt. Weiterhin ist die Klappenanordnung 36a so geschaltet, dass die den Kanalabschnitt 32a durchströmende Luft nicht in den Kanalabschnitt 38a gelangen kann, sondern vom Kanalabschnitt 32a in den Kanalabschnitt 30a strömt und dort zunächst auf den Wärmetauscher 24a trifft. Da dieser Wärmetauscher 24a Wärme vom Motorkühlmittel 26a aufnimmt, wird die diesen umströmende Luft zunächst erwärmt und strömt dann in Richtung zum Verdampfer 16a. Der Verdampfer 16a wird insbesondere im Bereich seiner Lamellenstruktur 22a dann von dieser erwärmten Luft erwärmt. Durch diese Erwärmung wird verstärkt Feuchtigkeit vom Verdampfer 16a abgegeben und von der diesen umströmenden Luft mitgeführt. Diese Luft tritt dann in den Kanalabschnitt 42a ein und wird beispielsweise nach außen hin abgegeben.

Soll dieses Temperiersystem 10a in einen normalen Betriebszustand gebracht werden, werden die drei Klappenanordnungen 34a, 36a und 40a in die strichliert eingezeichneten Zustände gebracht. Die Luft strömt dann vom Luftfördergbeläse 14a direkt in Richtung zum Kanalabschnitt 30a und dort zum Verdampfer 16a. Nach Umströmung des Verdampfers 16a kann sie auch den Wärmetauscher 24a umströmen und dann über den Kanalabschnitt 38a in den Fahrzeuginnenraum geleitet werden. Weiter kann selbstverständlich, ebenso wie bei der in Fig. 1 dargestellten Ausgestaltungsform, dafür gesorgt werden, dass in diesem normalen Temperierbetriebszustand die Luft, nachdem sie den Verdampfer 16a umströmt hat, zumindest teilweise nicht in Richtung zum Wärmetauscher 24a strömt, sondern durch eine nicht angezeigte Umgehungskanalleitung direkt vom Verdampfer 16a zum Kanalabschnitt 38a und in den Innenraum gelangt, um eine nachträgliche Erwärmung der zuvor einmal gekühlten Luft zu vermeiden.

Das in Fig. 2 dargestellte System ist also grundsätzlich zwischen zwei Zuständen umschaltbar. In einem ersten in der Fig. 2 erkennbaren Zustand ist es so geschaltet, dass es zum Trocknen des Verdampfers 16a benutzt werden kann und die Feuchtigkeit abführende Luft beispielsweise nach außen abgegeben werden kann. In einem zweiten Zustand kann das System normal genutzt werden, um unter Einsatz des Verdampfers 16a oder/und des Wärmetauschers 24a dafür zu sorgen, dass die in den Fahrzeuginnenraum einzuleitende Luft gekühlt, getrocknet bzw. auch erwärmt wird.

Auch bei diesem System kann so vorgegangen werden, dass das Trocknen des Verdampfers 16a dann vorgenommen wird, wenn ein dieses System 10a aufweisendes Fahrzeug außer Betrieb ist. Es können dann die Klappenanordnungen 34a, 36a, 40a in den in Fig. 2 gezeigten Zustand gebracht werden und durch Betreiben des Luftfördergebläses 14a die Luft in der durch durchgezogene Pfeile gezeigten Richtung zur Strömung angetrieben werden. Insbesondere unmittelbar nach dem Beenden eines Fahrbetriebs wird im Bereich einer Brennkraftmaschine und dem gesamten Kühlsystem derselben noch ausreichend Wärme vorhanden sein, um durch fortdauerndes Zirkulieren des Kühlmediums 26a noch ausreichend Wärme im Bereich des Wärmetauschers 24a zur Erwärmung der Luft zur Verfügung stellen zu können. Auch hier kann es wieder vorteilhaft sein, zusätzliche Energieversorgungssysteme, wie z.B. eine Brennstoffzelle, Solarzellen oder Batterien zur Verfügung zu haben, um dann, wenn das Fahrzeug an sich außer Betrieb ist, ausreichend elektrische Energie zum Betreiben der in diesem Zustand erforderlichen Systemkomponenten zur Verfügung stellen zu können.

## Patentansprüche

1. Temperiersystem für ein Fahrzeug, umfassend einen in einer Luftführungskanalanordnung (12a) positionierten Verdampfer (16a) einer Klimaanlage, durch welchen Verdampfer (16a) der in einen Fahrzeuginnenraum einzuleitenden Luft Wärme oder/und Feuchtigkeit entziehbar ist, wobei in der Luftführungskanalanordnung (12a) eine Wärmetauscheranordnung (24a) vorgesehen ist, durch welche dieser umströmende Luft Wärme zuführbar ist, und wobei die Wärmetauscheranordnung (24a) wenigstens in einer Verdampfertrocknungsbetriebsphase in Luftströmungsrichtung stromaufwärts des Verdampfers (16a) ist,
**dadurch gekennzeichnet, dass** die Luftführungskanalanordnung (12a) zwischen einem ersten Luftführungszustand, in welchem Luft zuerst die Wärmetauscheranordnung (24a) und danach den Verdampfer (16a) umströmt, und einem zweiten Luftführungszustand umschaltbar ist, in welchem die Luft zuerst den Verdampfer (16a) und danach die Wärmetauscheranordnung (24a) umströmt.

2. Temperiersystem nach Anspruch 1,
**dadurch gekennzeichnet, dass** bei in den ersten Luftführungszustand gestellter Luftführungskanalanordnung (12a) die Luftführungskanalanordnung (12a) die den Verdampfer (16a) umströmende Luft nicht in einen Fahrzeuginnenraum einleitet.

3. Temperiersystem nach Anspruch 1,
**dadurch gekennzeichnet, dass** bei in den ersten Luftführungszustand gestellter Luftführungskanalanordnung (12a) die Luftführungskanalanordnung (12a) die den Verdampfer (16a) umströmende Luft im Wesentlichen in einen bodennahen Bereich eines Fahrzeuginnenraums einleitet.

4. Temperiersystem nach einem der Ansprüche 1 bis 3,
**dadurch gekennzeichnet, dass** die Luftführungskanalanordnung (12a) in einen dritten Luftführungszustand stellbar ist, in welche die Luft ohne Umströmung der Wärmetauscheranordnung (24a) den Verdampfer (16a) umströmt.

5. Temperiersystem nach einem der Ansprüche 1 bis 4,
**dadurch gekennzeichnet, dass** die Luftführungskanalanordnung (12a) in einen vierten Luftführungszustand stellbar ist, in welchem die Luft weder die Wärmetauscheranordnung (24a) noch den Verdampfer (16a) umströmt.

6. Verfahren zum Trocknen eines in einem Temperiersystem nach einem der vorangehenden Ansprüche vorgesehenen Verdampfers (16a) einer Klimaanlage, bei welchem Verfahren dem Verdampfer (16a) zur Feuchtigkeitsabfuhr Wärme zugeführt wird, wobei das Verfahren durchgeführt wird, wenn ein das Temperiersystem aufweisendes Fahrzeug nicht in einem Fahrbetriebszustand ist.

7. Verfahren nach Anspruch 6,
**dadurch gekennzeichnet, dass** das Verfahren im Anschluss an das Beenden eines Fahrbetriebszustands durchgeführt wird.

## Claims

1. A temperature regulating system for a vehicle, comprising an evaporator (16a) of an air conditioning system positioned in an air guide channel arrangement (12a), the evaporator (16a) being adapted for withdrawing heat or/and humidity from the air which is to be fed into a vehicle interior, a heat exchanging arrangement (24a) being provided in the air guide channel arrangement (12a) for transferring heat to air flowing along the heat exchanger, the heat exchanging arrangement (24a) being situated upstream the evaporator in an air flow direction, at least during an evaporator drying operating phase,
**characterized in** the air guide channel arrangement (12a) being switchable between a first air guide condition in which air is first flowing along the heat exchanging arrangement (24a) and then along the evaporator (16a) and a second air guide condition in which the air is first flowing along the evaporator (16a) and then along the heat exchanging arrangement (24a).

2. A temperature regulating system according to claim 1,
**characterized in that** in case of the air guide channel arrangement (12a) being set in the first air guide condition the air guide channel arrangement (12a) will not insert the air flowing along the evaporator (16a) into a vehicle interior.

3. A temperature regulating system according to claim 1,
**characterized in that** in case of the air guide channel arrangement (12a) being set in the first air guide condition the air guide channel arrangement (12a) will insert the air flowing along the evaporator (16a) substantially into a bottom region of a vehicle interior.

4. A temperature regulating system according to one of claims 1 to 3,
**characterized in** the air guide channel arrangement (12a) being adjustable to a third air guide condition, wherein the air is flowing along the evaporator (16a) without flowing along the heat exchanging arrangement (24a).

5. A temperature regulating system according to one of claims 1 to 4,
**characterized in** the air guide channel arrangement (12a) being adjustable to a fourth air guide condition, wherein the air is flowing neither along the heat exchanging arrangement (24a) nor along the evaporator (16a).

6. A method for drying an evaporator (16a) of an air conditioning system provided in a temperature regulating system according to any one of the preceding claims, wherein heat is conducted to the evaporator (16a) for withdrawing humidity, the method being carried out when a vehicle comprising said temperature regulating system is not in a drive operation mode.

7. The method according to claim 6,
**characterized in** said method being carried out following the end of a drive operation mode.

## Revendications

1. Un système de réglage de la température pour un véhicule, comprenant un évaporateur (16a) d'un système de climatisation positionné dans un arrangement de guidage d'air (12a), l'évaporateur (16a) étant adapté pour retirer de la chaleur ou/et de l'humidité à l'air qui est inséré dans l'intérieur d'un véhicule, un arrangement d'échangeur thermique (24a) étant prévu dans l'arrangement de guidage d'air (12a) pour transférer de la chaleur à l'air circulant le long de l'èchangeur thermique, l'arrangement d'échangeur thermique (24a) étant situé en amont de l'évaporateur dans la direction du flux d'air, au moins pendant une phase opérationnelle de séchage de l'évaporateur,
**caractérisé par** l'arrangement de guidage d'air (12a) étant commutable entre un premier état de guidage d'air dans lequel l'air circule d'abord le long de l'arrangement d'échangeur thermique (24a) et puis le long de l'évaporateur (16a) et un deuxième état de guidage d'air dans lequel l'air circule d'abord le long de l'évaporateur (16a) et puis le long de l'arrangement d'échangeur thermique (24a).

2. Un système de réglage de la température selon la revendication 1,
**caractérisé en ce que** si le premier état de guidage d'air est sélecté pour l'arrangement de guidage d'air (12a) l'arrangement de guidage d'air (12a) ne va pas insérer l'air circulant le long de l'évaporateur (16a) dans l'intérieur du véhicule.

3. Un système de réglage de la température selon la revendication 1,
**caractérisé en ce que** si le premier état de guidage d'air est sélecté pour l'arrangement de guidage d'air (12a) l'arrangement de guidage d'air (12a) va insérer l'air circulant le long de l'évaporateur (16a) principalement dans une région de fond d'un intérieur de véhicule.

4. Un système de réglage de la température selon une des revendications 1 à 3,
**caractérisé par** l'arrangement de guidage d'air (12a) étant ajustable à un troisième état de guidage d'air, dans lequel l'air circule le long de l'évaporateur (16a) sans circuler le long de l'arrangement d'échangeur thermique (24a).

5. Un système de réglage de la température selon une des revendications 1 à 4,
**caractérisé par** l'arrangement de guidage d'air (12a) étant ajustable à un quatrième état de guidage d'air, dans lequel l'air circule ni le long de l'arrangement d'échangeur thermique (24a) ni le long de l'évaporateur (16a).

6. Une méthode pour sécher un évaporateur (16a) d'un système de climatisation prévu dans un système de réglage de la température selon une des revendications précédentes, selon laquelle de la chaleur est conduit à l'évaporateur (16a) pour retirer de l'humidité, la méthode étant appliquée quand une véhicule comprenant ce système de réglage de la température ne se trouve pas dans un mode de transport opérationnel.

7. La méthode selon la revendication 6,
**caractérisée en** cette méthode étant appliquée après la fin du mode de transport opérationnel.
